# FASCICULE DE BREVET EUROPEEN

(11) **EP 2 189 771 B1**
(45) Date de publication et mention de la délivrance du brevet: **26.08.2015**
(21) Numéro de dépôt: 08169598.3
(22) Date de dépôt: 21.11.2008
(51) Int. Cl.: G01L 3/20

(54) **Système de régulation d'un frein hydraulique**
System zur Regulierung einer hydraulischen Bremse
System for adjusting a hydraulic brake

(43) Date de publication de la demande: 26.05.2010
(73) Titulaire: Techspace Aero S.A., 4041 Milmort (BE)
(72) Inventeur: Garnier, Yannick, 4000 Liège (BE)
(74) Mandataire: Pronovem

(56) Documents cités:
- DE-A1- 3 733 513
- US-A- 3 138 954
- US-A- 3 851 524
- US-A- 5 571 975

## Description

### Objet de l'invention

La présente invention se rapporte à un frein hydraulique pour banc d'essai et plus particulièrement à un système de régulation de la vanne d'admission du frein hydraulique.

Le domaine d'application de l'invention est plus particulièrement celui des bancs d'essais pour turbopropulseurs, turbofans ou moteurs d'hélicoptère (moteur « turboshaft »).

### Etat de la technique

On connaît des moteurs d'avion, tels que les turbopropulseurs, et d'hélicoptère dont la turbine entraîne une hélice non carénée. Dans les bancs d'essais destinés à tester ce type de moteur, l'hélice est remplacée par un frein hydraulique, qui doit dissiper la puissance du moteur. Le frein hydraulique est constitué d'un rotor entraîné, éventuellement par l'intermédiaire d'un réducteur de vitesse, par l'arbre basse pression du moteur, ce rotor tournant généralement dans l'eau. La quantité d'eau présente dans le frein remplace, le temps des essais, la résistance variable de l'hélice en fonction de l'incidence des pales.

Deux configurations sont possibles. Soit le moteur testé contrôle la vitesse de l'arbre et le pilote de l'essai commande l'ouverture et la fermeture des vannes du frein hydraulique de manière à modifier le couple. Soit le moteur ne contrôle pas la vitesse de l'arbre, celle-ci devant alors être contrôlée par le banc lui-même. C'est dans cette configuration que l'on se situe ici.

En régime stationnaire, le frein hydraulique dissipe bien la puissance produite à la turbine et les systèmes de régulation connus de l'état de la technique ne posent pas de problème particulier. A titre d'exemple, la vanne d'entrée s'ouvre ou se ferme en fonction de la puissance mesurée sur le frein et la vanne de sortie régule la vitesse de l'arbre en boucle fermée.

Par contre, en régime transitoire, la puissance développée par la turbine augmente ou décroît plus rapidement que l'admission d'eau dans le frein. Il peut donc en résulter une survitesse de la turbine et des dégâts au niveau du moteur.

Dans l'art antérieur, des freins hydrauliques avec des vannes d'entrée et sortie contrôlées dynamiquement, c'est à dire permettant un remplissage et une vidange rapide du frein hydraulique sont présentés, voir par exemple les documents US 5, 571, 975 et US 3,138,954.

Le document US-A-5,834,654 propose un système de régulation commandant l'ouverture et la fermeture simultanée des vannes d'entrée et sortie d'un dynamomètre à frein hydraulique. Ce système permet de contrôler le niveau d'eau dans le frein ainsi que le flux d'eau traversant le frein afin de contrôler la température et éviter un échauffement de l'eau. Les vannes d'entrée et de sortie s'ouvrent et se ferment respectivement à une même vitesse pour augmenter le niveau d'eau à l'intérieur du frein hydraulique et vice versa pour réduire le niveau d'eau dans le frein hydraulique. De même, les vannes d'entrée et de sortie s'ouvrent, et inversement se ferment, dynamiquement à une même vitesse pour augmenter ou pour réduire le flux d'eau afin de respectivement diminuer ou augmenter la température de l'eau. Le système de régulation des vannes d'entrée et sortie opère sur base de la différence entre une consigne et un paramètre mesuré pouvant être le couple exercé sur l'axe, la température de l'eau ou encore la puissance absorbée. La régulation peut se faire aussi sur la combinaison de deux de ces paramètres. Ce système permet une réponse des vannes d'ouverture et fermeture sur base d'un feedback auquel un certain retard est inhérent.

Le document US-A-2003/0223890 décrit un système et une méthode de contrôle volumétrique de fluide pour dynamomètre à frein hydraulique qui comprend une recirculation en boucle fermée pour maintenir un volume de fluide constant dans le frein ainsi qu'une température de l'eau sensiblement constante. Le volume de fluide dans le frein est contrôlé en fournissant, respectivement en retirant, du fluide sélectivement au frein, respectivement du frein. L'apport et la vidange du fluide dans le frein se font soit uniquement via le port d'entrée ou via respectivement les ports d'entrée et sortie du frein. Ce document ne décrit pas plus avant le système de régulation.

### Buts de l'invention

La présente invention a pour but de proposer un système de régulation de l'admission d'eau dans un frein hydraulique d'un banc d'essai, permettant de remédier aux inconvénients de l'état de la technique.

En particulier, l'invention a pour but de proposer un système de régulation de la vanne d'admission d'eau du frein hydraulique utilisé sur des bancs d'essais de turbopropulseurs, de turbofans ou moteurs d'hélicoptère.

L'invention vise encore à fournir un système de régulation répondant plus rapidement au changement de régime du moteur.

L'invention vise encore à éviter tout endommagement du moteur lors des phases de décélération ou d'accélération du moteur (régime transitoire).

### Principaux éléments caractéristiques de l'invention

Un premier objet de la présente invention, indiqué dans la revendication 1, se rapporte à un frein hydraulique régulé pour banc d'essai de moteur aéronautique comprenant un frein hydraulique proprement dit et au moins une vanne d'admission et une vanne de sortie de fluide, de préférence de l'eau, au moins une des deux vannes étant contrôlée, **caractérisé en ce que** ledit frein comprend un système de régulation au moins de la vanne d'admission configuré pour que celle-ci soit actionnée sur base d'un signal de commande obtenu en sommant un signal image du régime stabilisé d'un premier paramètre du moteur et un signal image de la variation d'au moins un second paramètre du moteur.

Des exemples de formes d'exécution de l'invention reprennent, en combinaison avec les caractéristiques de la revendication 1, une ou plusieurs des caractéristiques additionnelles suivantes, indiquées dans les revendications secondaires :
- le signal image du régime stabilisé d'un premier paramètre du moteur est la puissance du moteur mesurée ;
- le signal image de la variation d'au moins un second paramètre du moteur est la dérivée ou une fonction représentative de la variation temporelle du ou des seconds paramètres du moteur ;
- ledit second paramètre du moteur est la puissance demandée par un calculateur du moteur ou FADEC, la vitesse d'un corps haute pression, un débit de carburant, l'angle d'une manette de commande du moteur, la puissance mesurée du moteur ou le couple mesuré sur ledit frein hydraulique ;
- il comporte en outre un système de régulation, de préférence en boucle fermée, de la vanne de sortie du frein hydraulique ;
- le système de régulation de la vanne de sortie comprend un contrôleur proportionnel-intégral-dérivé ou PID contrôlant la vanne de sortie en boucle fermée sur base de la différence entre une consigne et un paramètre mesuré ;
- le paramètre mesuré est la vitesse de l'arbre du moteur ;
- les vannes d'admission et de sortie sont des vannes proportionnelles contrôlées, par exemple pneumatiques.

Un autre objet de la présente invention, indiqué dans la revendication 10, se rapporte à l'utilisation du frein hydraulique régulé tel que décrit ci-dessus dans un banc d'essai pour turbopropulseurs, turbofans ou moteurs d'hélicoptère.

### Brève description des figures

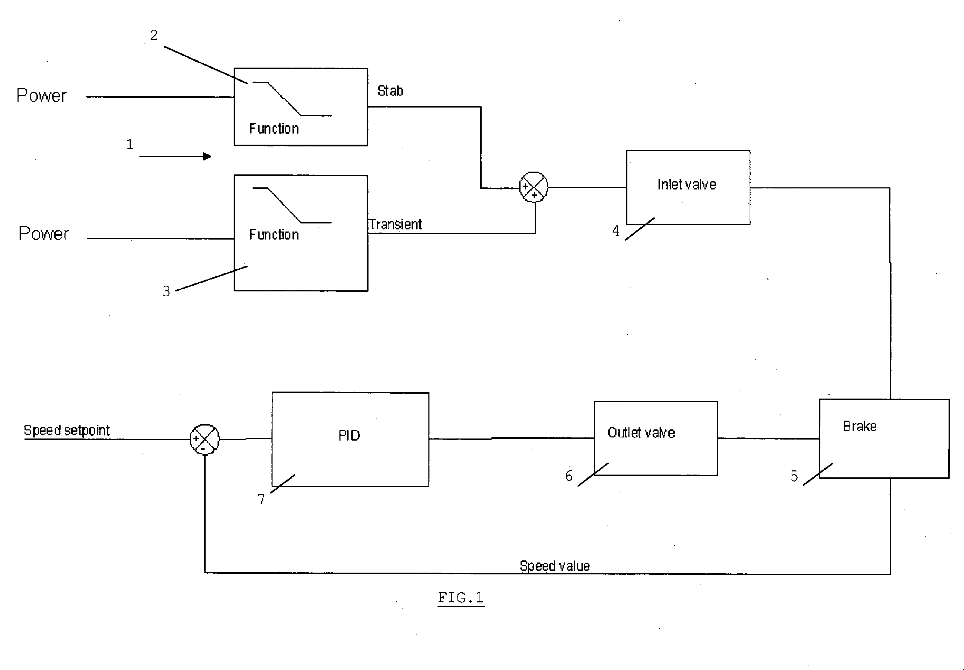

La figure 1 représente schématiquement un frein hydraulique avec ses systèmes de régulation des vannes d'entrée et de sortie, selon la présente invention.

### Description détaillée d'une forme d'exécution selon l'état de la technique

Comme représenté sur la figure 1, un frein hydraulique selon l'état de la technique comprend un système de régulation 1 d'une vanne d'admission d'eau 4, le frein hydraulique en tant que tel 5 et un système de régulation 7 d'une vanne de sortie 6 du frein hydraulique.

Les vannes d'admission 4 et de sortie 6 sont des vannes proportionnelles contrôlées.

La vanne de sortie peut être régulée par un contrôleur PID (proportionnel-intégral-dérivé) 7 sur la différence entre la vitesse de l'arbre du moteur mesurée et une consigne (« setpoint »).

Pour la vanne d'entrée, plusieurs solutions sont possibles :
- régulation comme la vanne de sortie, mais en opposition (par ex. brevet US-A-5,834,654);
- en boucle ouverte avec la puissance mesurée (vitesse de l'arbre x couple) sur le frein comme paramètre d'entrée ou avec une image de cette puissance en fonctionnement stabilisé comme paramètre d'entrée (indice 2 sur la figure 1) ;
- en boucle ouverte avec une position connue d'ouverture de la vanne et nécessitant un changement de mode de fonctionnement du banc pour les transitoires. Cette option ne fonctionne pas dans tous les cas de figure (accélération lente par exemple).

### Description de formes d'exécution préférées de l'invention

Selon une forme d'exécution préférée de l'invention, dans le système de régulation de la vanne d'admission 4, un signal image 3 de variation de la puissance de la turbine est ajouté au signal de puissance 2 mesuré en régime stabilisé pour commander l'ouverture de la vanne d'admission 4, afin de pouvoir réagir plus rapidement dans une configuration de transitoire.

Avantageusement, ledit signal image 3 peut être :
- une dérivée d'un signal d'entrée lors d'un transitoire tel que la puissance demandée par le calculateur du moteur (FADEC), la vitesse du corps haute pression (HP), le débit de carburant, la puissance réelle, le couple mesuré sur le frein, l'angle de la manette de commande (« throttle ») ou
- toute autre fonction de ces paramètres ayant une valeur de sortie dépendant de la vitesse de variation des paramètres d'entrée.

### Avantages de l'invention

La présente invention permet de s'affranchir de l'inertie liée aux systèmes de régulation de l'état de la technique et par conséquent, de réagir plus rapidement et de manière appropriée en cas de transitoire.

Elle permet également d'augmenter la capacité du banc en termes de dynamique et d'opérabilité. Ainsi, le pilote peut opérer les transitoires sans se préoccuper du mode de fonctionnement et/ou de la vitesse à laquelle il va accélérer. Le banc est capable de transitoires plus rapides que selon l'état de la technique.

## Revendications

1. Frein hydraulique régulé pour banc d'essai de moteur aéronautique comprenant un frein hydraulique proprement dit (5) et au moins une vanne d'admission (4) et une vanne de sortie (6) de fluide, de préférence de l'eau, au moins une des deux vannes (4, 6) étant contrôlée, **caractérisé en ce que** ledit frein comprend un système de régulation (1) au moins de la vanne d'admission (4) configuré pour que celle-ci soit actionnée sur base d'un signal de commande obtenu en sommant un signal image du régime stabilisé d'un premier paramètre du moteur (2) et un signal image de la variation d'au moins un second paramètre du moteur (3).

2. Frein hydraulique selon la revendication 1, **caractérisé en ce que** le signal image du régime stabilisé d'un premier paramètre du moteur (2) est la puissance du moteur mesurée.

3. Frein hydraulique selon la revendication 1, **caractérisé en ce que** le signal image de la variation d'au moins un second paramètre du moteur (3) est la dérivée ou une fonction représentative de la variation temporelle du ou des seconds paramètres du moteur (3).

4. Frein hydraulique selon la revendication 3, **caractérisé en ce que** ledit second paramètre du moteur (3) est la puissance demandée par un calculateur du moteur ou FADEC, la vitesse d'un corps haute pression, un débit de carburant, l'angle d'une manette de commande du moteur, la puissance mesurée du moteur, ou le couple mesuré sur ledit frein hydraulique.

5. Frein hydraulique selon la revendication 1, **caractérisé en ce qu'**il comporte en outre un système de régulation (7), de préférence en boucle fermée, de la vanne de sortie (6) du frein hydraulique (5).

6. Frein hydraulique selon la revendication 5, **caractérisé en ce que** le système de régulation (7) de la vanne de sortie (6) comprend un contrôleur proportionnel-intégral-dérivé ou PID contrôlant la vanne de sortie (6) en boucle fermée sur base de la différence entre une consigne et un paramètre mesuré.

7. Frein hydraulique selon la revendication 6, **caractérisé en ce que** le paramètre mesuré est la vitesse de l'arbre du moteur.

8. Frein hydraulique selon l'une quelconque des revendications précédentes, **caractérisé en ce que** les vannes d'admission (4) et de sortie (6) sont des vannes proportionnelles contrôlées.

9. Frein hydraulique selon la revendication 8, **caractérisé en ce que** lesdites vannes (4, 6) sont des vannes pneumatiques.

10. Utilisation d'un frein hydraulique régulé selon l'une quelconque des revendications précédentes dans un banc d'essai pour turbopropulseurs, turbofans ou moteurs d'hélicoptère.

## Patentansprüche

1. Regulierte hydraulische Bremse für Flugzeugmotoren-Prüfstand, umfassend eine eigentliche hydraulische Bremse (5) und mindestens ein Einlassventil (4) und ein Auslassventil (6) für ein Fluid, vorzugsweise Wasser, wobei mindestens eines der beiden Ventile (4, 6) gesteuert ist, **dadurch gekennzeichnet, dass** die Bremse mindestens ein System zur Regulierung (1) des Einlassventils (4) umfasst, das konfiguriert ist, damit das Einlassventil auf der Basis eines Steuersignals aktiviert wird, das beim Addieren eines Bildsignals des stationären Betriebs eines ersten Motorparameters (2) und eines Bildsignals der Variation mindestens eines zweiten Motorparameters (3) erhalten wird.

2. Hydraulische Bremse nach Anspruch 1, **dadurch gekennzeichnet, dass** das Bildsignal des stationären Betriebs eines ersten Motorparameters (2) die gemessene Motorleistung ist.

3. Hydraulische Bremse nach Anspruch 1, **dadurch gekennzeichnet, dass** das Bildsignal der Variation mindestens eines zweiten Motorparameters (3) die Ableitung oder eine repräsentative Funktion der zeitlichen Variation des oder der zweiten Motorparameter(s) (3) ist.

4. Hydraulische Bremse nach Anspruch 3, **dadurch gekennzeichnet, dass** der zweite Motorparameter (3) die von einem Motorrechner oder FADEC verlangte Leistung, die Geschwindigkeit eines Hochdruckkörpers, ein Kraftstoffdurchfluss, der Winkel eines Bedienungshebels des Motors, die gemessene Motorleistung oder das an der hydraulischen Bremse gemessene Moment ist.

5. Hydraulische Bremse nach Anspruch 1, **dadurch gekennzeichnet, dass** sie ferner ein System zur Regulierung (7), vorzugsweise in geschlossener Schleife, des Auslassventils (6) der hydraulischen Bremse (5) aufweist.

6. Hydraulische Bremse nach Anspruch 5, **dadurch gekennzeichnet, dass** das System zur Regulierung (7) des Auslassventils (6) einen proportional-integral-derivative controller oder PID-Regler umfasst, der das Auslassventil (6) in geschlossener Schleife auf der Basis der Differenz zwischen einem Sollwert und einem gemessenen Parameter steuert.

7. Hydraulische Bremse nach Anspruch 6, **dadurch gekennzeichnet, dass** der gemessene Parameter die Geschwindigkeit der Motorwelle ist.

8. Hydraulische Bremse nach irgendeinem der vorangehenden Ansprüche, **dadurch gekennzeichnet, dass** das Einlass- (4) und Auslassventil (6) gesteuerte Proportionalventile sind.

9. Hydraulische Bremse nach Anspruch 8, **dadurch gekennzeichnet, dass** die Ventile (4, 6) pneumatische Ventile sind.

10. Verwendung einer regulierten hydraulischen Bremse nach irgendeinem der vorangehenden Ansprüche in einem Prüfstand für Turboprop-Triebwerke, Turbofan-Triebwerke oder Hubschraubermotoren.

## Claims

1. A regulated hydraulic brake for an aeronautic engine test bench comprising a hydraulic brake proper(5) and at least one intake valve (4) and one outlet valve (6) for a fluid, preferably water, at least one of the two valves (4, 6) being controlled, **characterized in that** said brake comprises at least a control system (1) for the intake valve (4) configured so that the latter is actuated on the basis of a control signal obtained by adding an image signal of the steady-state rating of the first parameter of the engine (2) and an image signal of the variation of at least one second parameter of the engine (3).

2. A hydraulic brake according to claim 1, **characterized in that** the image signal of the steady-state rating of a first parameter of the engine (2) is the measured power of the engine.

3. A hydraulic brake according to claim 1, **characterized in that** the image signal of the variation of at least one second parameter of the engine (3) is the derivative or a function representative of the time variation of the second parameter(s) of the engine (3).

4. A hydraulic brake according to claim 3, **characterized in that** said second parameter of the engine (3) is the power requested by a computer of the engine or FADEC, the speed of a high-pressure body, a fuel flow rate, the angle of a control lever of the engine, the measured power of the engine, or the measured torque on said hydraulic brake.

5. A hydraulic brake according to claim 1, **characterized in that** it further includes a control system (7), in particular in closed loop, for the outlet valve (6) of the hydraulic brake (5).

6. A hydraulic brake according to claim 5, **characterized in that** the control system (7) of the outlet valve (6) comprises a proportional-integral-derivative or PID controller that controls the outlet valve (6) in closed loop on the basis of the difference between a setpoint and a measured parameter.

7. A hydraulic brake according to claim 6, **characterized in that** the measured parameter is the speed of the shaft of the engine.

8. A hydraulic brake according to any one of the preceding claims, **characterized in that** the intake (4) and outlet (6) valves are controlled proportional valves.

9. A hydraulic brake according to claim 8, **characterized in that** said valves (4, 6) are pneumatic valves.

10. A use of a regulated hydraulic brake according to any one of the preceding claims in a test bench for turboprops, turbofans or helicopter engines.
